# EUROPEAN PATENT APPLICATION

(11) **EP 2 249 321 A1**
(43) Date of publication of application: **10.11.2010**
(21) Application number: 09714341.6
(22) Date of filing: 18.02.2009
(51) Int. Cl.: G07F 7/08, G06K 17/00, G06Q 10/00, G06Q 20/00, G06Q 30/00

(54) **VENDING MACHINE READER/WRITER, AND VENDING MACHINE HAVING THE READER/WRITER**

(30) Priority: 29.02.2008 JP 2008049985; 29.02.2008 JP 2008049986
(71) Applicant: Sanden Corporation, Isesaki-shi Gunma 372-8502 (JP)
(72) Inventor: KAMEDA, Tomonobu, Isesaki-shi Gunma 372-8502 (JP)
(74) Representative: Haley, Stephen
(86) International application number: PCT/JP2009/052777
(87) International publication number: WO 2009/107527

(57) **Abstract**

The present invention provides a vending machine reader/writer capable of improving the conveniences of commodity purchasing with use of electronic money, and a vending machine including the reader/writer. The vending machine reader/writer is disposed in the vending machine including a commodity selecting means, and performs settlement processing for the electronic money by reading/writing electronic money information stored in a predetermined information storing medium on the basis of a commodity selected by the commodity selecting means. The reader/writer includes an electronic money service selecting means for selecting one of a plurality of electronic money services, and a control means for performing settlement processing for the electronic money on the basis of the commodity selected by the commodity selecting means and either the electronic money service selected by the electronic money service selecting means or the electronic money service corresponding to the electronic money information stored in the information storing medium.

## Description

### Technical field

The present invention relates to a vending machine reader/writer disposed in a vending machine for vending commodities such as canned or bottled beverages or beverages in PET bottles, for example, and can perform settlement processing for an information storing medium which stores electronic money information, and a vending machine having the reader/writer.

### Background art

Conventionally, as the vending machine reader/writer of this kind and a vending machine having the reader/writer, there has been known the vending machine, which includes a commodity selecting means, an electronic money service selecting means for selecting an electronic money service used for settlement processing, and a vending machine reader/writer which performs communication with an information storing medium which stores electronic money information, and performs settlement processing for electronic money by reading/writing electronic money information of the information storing medium through the vending machine reader/writer on the basis of a selected commodity and electronic money service, when a user holds the information storing medium inside of the range communicable with the vending machine reader/writer after selecting the commodity and electronic money service (for example, see Patent Document 1).

In this vending machine, electronic money service can be selected a plurality of times until the information storing medium is held over the vending machine reader/writer when the vending processing is performed in the sequence of a user selecting a commodity, thereafter, selecting an electronic money service, and holding the information storing medium over the vending machine reader/writer. Further, when the information storing medium is held over the vending machine reader/writer, the vending machine performs settlement processing for the electronic money on the basis of the selected commodity and the electronic money service finally selected.

However, in the aforementioned conventional example, in the case of performing the above described vending processing, if the electronic money service is once selected, the operation of changing the selected commodity cannot be performed. Here, if the commodity to be purchased is desired to be changed, all the selected contents are cancelled once, and thereafter, the commodity and the electronic money service need to be selected once again. Therefore, commodity purchasing using electronic money has been likely to be complicated.

Further, as the conventional vending machine reader/writer and the vending machine having the reader/writer, there has been known the vending machine, which includes a commodity selecting means, a vending machine reader/writer which performs communication with an information storing medium which stores electronic money information, and an electronic money service selecting means for selecting one electronic money service out of a plurality of electronic money services, and performs settlement processing for electronic money by reading/writing the electronic money information of the information storing medium through the vending machine reader/writer on the basis of a selected commodity and electronic money service when a user holds the information storing medium inside of the range communicable with the vending machine reader/writer after selecting the commodity and the electronic money service (for example, see Patent Document 2).

In this vending machine, when the commodity to be purchased is selected by the commodity selecting means, the electronic money service corresponding to the number of selections is selected, so that settlement processing for the electronic money is performed based on the selected commodity and electronic money service, and a commodity can be purchased by using the electronic money service corresponding to one piece of electronic money information out of a plurality of pieces of electronic money information stored in the information storing medium.

Meanwhile, the other conventional vending machines are each configured to be capable of purchasing a commodity by using the information storing medium storing the electronic money information corresponding to one electronic money service, and a user can purchase a commodity by a simple procedure of holding the information storing medium over the reader/writer, or the like after selecting the commodity, for example.

However, in the conventional examples, the electronic money service needs to be selected by using the electronic money service selecting means when settlement processing for the electronic money is performed, and therefore, when the user purchases a commodity by using the information storing medium storing the electronic money information of one electronic money service, the purchasing procedure of the commodity changes depending on the vending machines, and commodity purchasing with use of the electronic money has been likely to be complicated.
Patent Document 1: Japanese Patent Publication 2007-102317
Patent Document 2: Japanese Patent Publication 2007-241884

### Disclosure of the invention

### Problems to be solved by the invention

The present invention is made in view of the aforementioned problems, and an object of the present invention is to provide a vending machine reader/writer which can improve the commodity purchasing conveniences using electronic money, and a vending machine having the reader/writer.

### Means for solving the problems

In order to attain the aforementioned object, a vending machine reader/writer of the present invention is a vending machine reader/writer which is disposed in a vending machine provided with a commodity selecting means, and performs settlement processing for electronic money by reading/writing electronic money information stored in a predetermined information storing medium on the basis of a commodity selected by the commodity selecting means, and includes an electronic money service selecting means for selecting one electronic money service out of a plurality of electronic money services, and a control means which performs settlement processing for the electronic money on the basis of a commodity which is selected by the commodity selecting means and either the electronic money service which is selected by the electronic money service selecting means or the electronic money service corresponding to the electronic money information stored in the information storing medium, if capable of communicating with the aforementioned information storing medium.

Further, in order to attain the aforementioned object, a vending machine of the present invention includes a commodity selecting means, a reader/writer which performs communication with an information storing medium which stores electronic money information, an electronic money service selecting means for selecting one electronic money service out of a plurality of electronic money services, and a control means which performs settlement processing for the electronic money by reading/writing the electronic money information of the information storing medium through the reader/writer on the basis of a commodity which is selected by the commodity selecting means, and either an electronic money service which is selected by the electronic money service selecting means or an electronic money service corresponding to the electronic money information stored in the information storing medium, if capable of communicating with the aforementioned information storing medium.

Thereby, settlement processing for the electronic money is performed on the basis of the commodity selected by the commodity selecting means and the electronic money service selected by the electronic money service selecting means if capable of communicating with the information storing medium. Therefore, the other commodities can be selected until the settlement processing for the electronic money is performed after the commodity is selected, and the other electronic money services can be selected until the settlement processing for the electronic money is performed after the electronic money service is selected.

Further, the settlement processing for the electronic money is performed on the basis of the commodity selected by the commodity selecting means and the electronic money service corresponding to the electronic money information stored in the information storing medium. Therefore, when a user purchases a commodity by using the information storing medium which stores the electronic money information corresponding to one electronic money service, the procedural step of selecting the electronic money service can be omitted.

### Advantages of the invention

According to the present invention, until the settlement processing for the electronic money is performed after a commodity is selected, the other commodities can be selected, and until the settlement processing for the electronic money is performed after an electronic money service is selected, the other electronic money services can be selected. Therefore, after each of the commodity and the electronic money service is selected once, the other commodities and the other electronic money services can be selected again. Accordingly, a complicated operation of selecting a commodity and an electronic money service after cancelling all selected contents is not needed, and conveniences of commodity purchasing using electronic money can be improved.

Further, when a user purchases a commodity by using the information storing medium storing the electronic money information corresponding to one electronic money service, the procedural step of selecting the electronic money service can be omitted. Therefore, the procedure of the commodity purchasing in the case of use of a contactless IC card corresponding to only one electronic money service does not have to be changed in accordance with vending machines, and conveniences of commodity purchasing using electronic money can be improved.

### Brief description of the drawings

Figure 1 is a perspective view of a vending machine showing a first embodiment of the present invention;
Figure 2 is a sectional side view of the vending machine shown in Figure 1;
Figure 3 is a functional block diagram of the vending machine shown in Figure 1;
Figure 4 is a functional block diagram of a contactless IC card;
Figure 5 is a flowchart explaining an operation of a main control unit;
Figure 6 is a flowchart explaining an operation of an RW control unit;
Figure 7 is a flowchart explaining an operation of an RW control unit showing a second embodiment of the present invention;
Figure 8 is a functional block diagram of a second contactless IC card;
Figure 9 is a flowchart explaining an operation of an RW control unit showing a third embodiment of the present invention; and
Figure 10 is a flowchart explaining an operation of an RW control unit showing a fourth embodiment of the present invention.

### Description of symbols

1 ... vending machine main body, 14 ... commodity selecting button, 20 ... main control unit, 100 ... reader/writer, 103 ... electronic money service selecting button, 105 ... antenna, 200 ... contactless IC card, 203c, 204c ... electronic money information, 300 ... second contactless IC card, 303c ... electronic money information.

### Best mode for carrying out the invention

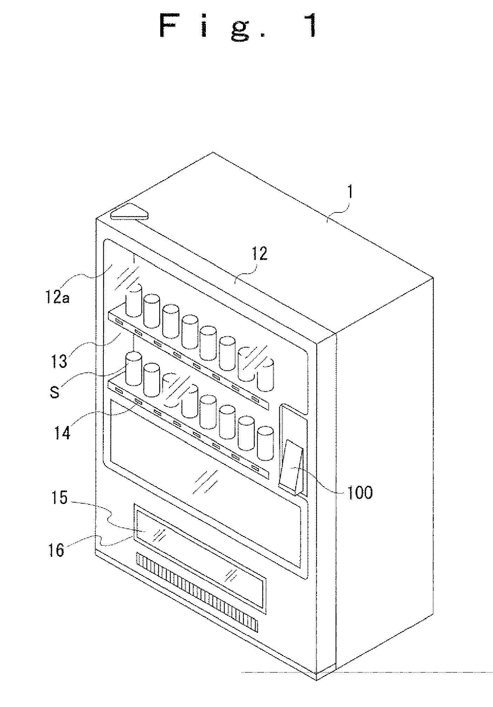

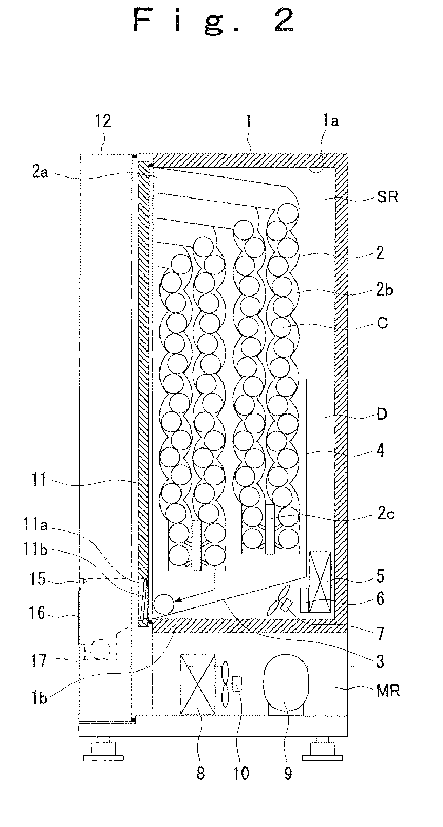

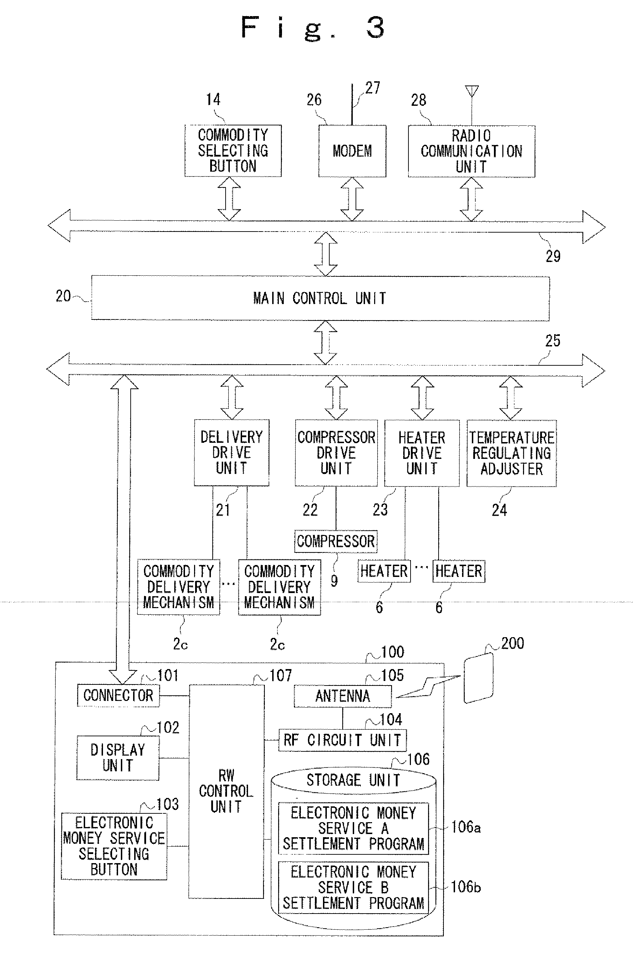

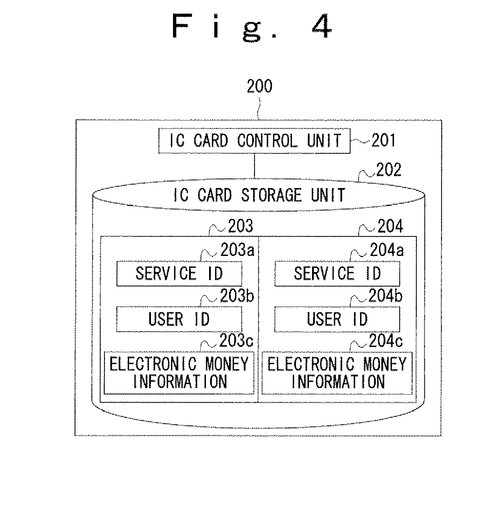

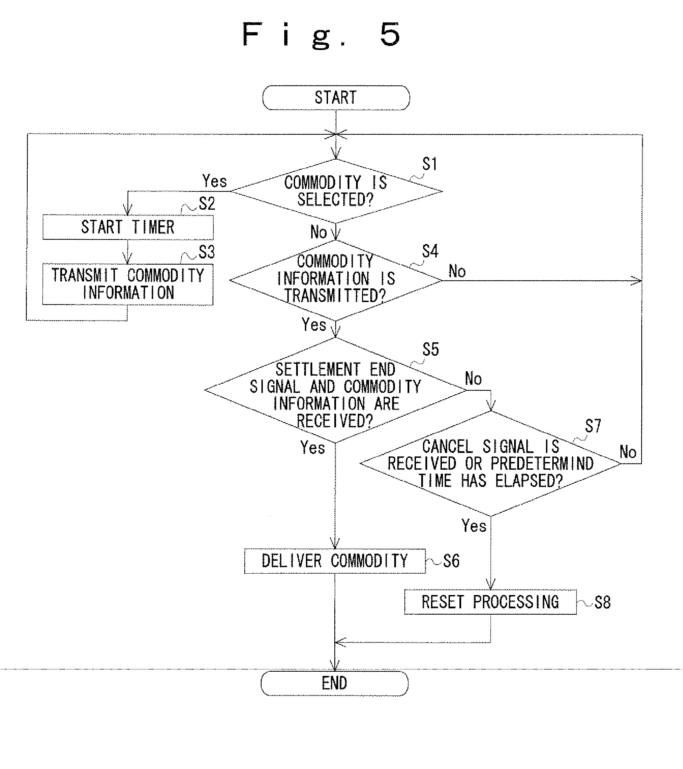

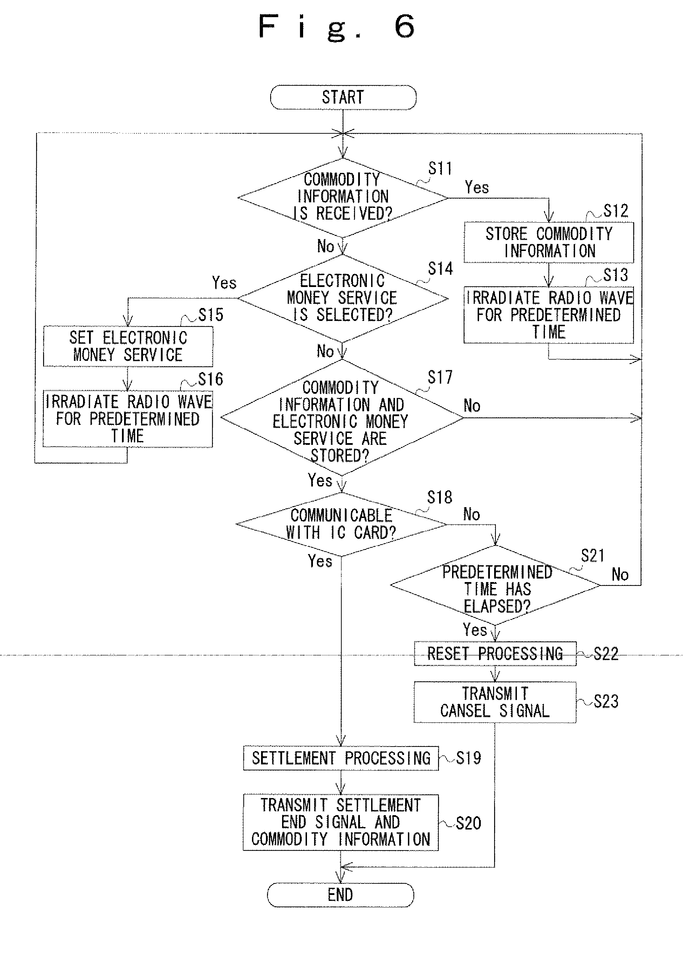

Figures 1 to 6 show a first embodiment of the present invention. Figure 1 is a perspective view of a vending machine. Figure 2 is a sectional side view of the vending machine shown in Figure 1. Figure 3 is a functional block diagram of the vending machine shown in Figure 1. Figure 4 is a functional block diagram of a contactless IC card. Figure 5 is a flowchart explaining an operation of a main control unit. Figure 6 is a flowchart explaining an operation of an RW control unit.

First, a structure of the vending machine will be described with reference to Figures 1 and 2.

A vending machine main body 1 forms a box shape, and includes therein a thermal insulating chamber 1a with a front face opened. The thermal insulating chamber 1a is divided into a plurality of commodity storage rooms SR arranged side by side in a width direction of the vending machine main body 1 by partition plates with thermal insulating properties (not illustrated).

In each of the commodity storage rooms SR, a commodity storage rack 2 formed by a serpentine type rack is disposed. Each of the commodity storage racks 2 has a commodity input port 2a in an upper portion at the front face side, and stores commodities C such as canned or bottled beverages, or beverages in plastic bottles in a serpentine storage passage 2b in a state laterally stacked in layers. Further, a commodity delivery mechanism 2c for dropping and delivering the stored commodities C one by one on a chute plate 3 is provided in a lower part of each of the commodity storage racks 2. Further, each commodity storage rack 2 disposed in each of the commodity storage rooms SR is provided with a sold-out detecting sensor (not illustrated) which detects presence or absence of the commodity C in each storage passage 2b. The commodity storage rack 2 is not limited to the serpentine type rack, but the other types of racks which are capable of delivering the stored commodities one by one similarly to the serpentine type rack can be used.

Further, in each of the commodity storage rooms SR, the chute plate 3 and a duct plate 4 are provided from its bottom part to its rear part. In the spaces at a lower side and a rear side of the chute plate 3 and the duct plate 4, an evaporator 5, an electric heater 6, a cooling/humidifying air circulating blower 7 and the like of a refrigerator-composing devices are disposed, and the space at the rear side of the duct plate 4 is defined as a duct D. Further, in each of the commodity storage rooms SR, a temperature sensor (not illustrated) which detects the temperature of the commodity storage room SR is provided.

A machine room MR is provided at a lower side of a bottom plate 1b of the heat insulating chamber 1a, and in the machine room MR, a condenser 8, a compressor 9 and an expansion means (not illustrated), an exhaust heat blower 10 and the like of the refrigerator composing-devices are disposed.

Further, at the front side of the thermal insulating chamber 1a, a thermal insulating inner door 11 which covers its front opening to be openable and closable is provided. Packing (without a reference numeral) for bringing the commodity storage rooms SR into an airtight state with the inner door 11 closed is provided at the front end portions (the front end portion at the lower side is the front end portion of the bottom plate 1b) at the top, bottom, left and right of the thermal insulating chamber 1a and at the front end portion of each partition plate, and each of the commodity storage rooms SR becomes an independent thermal insulating space with the inner door 11 closed. Further, at a lower part of the inner door 11, a plurality of window holes 11a corresponding to the chute plates 3 of the respective commodity storage rooms SR are formed, and each of the window holes 11a is provided with a flap door 11b which is pushed to open by the commodity C which slides down on the chute plate 3.

More specifically, in the vending machine, each of the commodity storage rooms SR defines an independent thermal insulating space, and each of the commodity storage rooms SR is independently provided with the evaporator 5 and the electric heater 6. Therefore, any one of three modes of cooling, heating and non-cooling/heating can be arbitrarily selected and carried out for each commodity storage room SR by a temperature regulating adjuster 24 (see Figure 3) which will be described later.

An outer door 12 is provided to be openable and closable at a front surface opening of the vending machine main body 1, and a transparent plate 12a formed by an acrylic plate or the like is provided at an upper portion of a surface of the outer door 12. Further, a showroom 13 for displaying a plurality of commodity samples S is provided behind the transparent plate 12a. Further, a commodity selecting button 14 is provided below each of the commodity samples S. Each of the commodity selecting buttons 14 is formed by a laterally oriented push button, a selection lamp (not illustrated) is disposed at one end side in its width direction, and a sold-out lamp (not illustrated) is provided at the other end side in the width direction. The selection lamp is made of an LED which emits a light of a predetermined color (for example, green), and is lit when the commodity selecting button 14 of it is depressed, and indicates that the commodity C is selected. The sold-out lamp causes the characters indicating "sold-out" to emit light by the LED of a predetermined color (for example, red), and when the commodity C corresponding to the commodity selecting button 14 is sold out, the sold-out lamp is lit, and indicates that the commodity C is not vendable.

Further, a commodity outlet port 15, a vending machine reader/writer 100 (hereinafter, called the reader/writer 100) are provided at a front surface of the outer door 12 in the layout shown in Figure 1. For reference, the commodity outlet port 15 is provided with a flap door 16 which can be manually opened, and a commodity receiving plate 17 which receives the commodity C discharged from the flap door 11b is provided inside the flap door 16.

Next, with reference to Figure 3, a control system configuration of the vending machine shown in Figures 1 and 2 will be described.

A main control unit 20 is configured by a computer including a CPU, a RAM, a ROM, a timer circuit and the like, and operates as a master device which controls a control device (slave device) provided in the vending machine main body 1. Explaining in concrete, a delivery drive unit 21, a compressor drive unit 22, a heater drive unit 23, a temperature regulating adjuster 24 and a vending machine reader/writer 100 are connected to the main control unit 20 via a first transmission line 25, and each of the commodity selecting buttons 14, a modem 26 and a radio communication unit 28 are connected to the main control unit 20 via a second transmission line 29. The main control unit 20 transmits a control signal via the respective transmission lines 25 and 29, and thereby controls the above described respective devices. Further, the sold-out detecting unit (not illustrated) which detects presence or absence of the commodity C for each storage passage 2b in the commodity storage rack 2 disposed in each of the commodity storage rooms SR, and a temperature detecting unit (not illustrated) which detects the temperature of each of the commodity storage rooms SR are also connected to the main control unit 20 via the first transmission line 25. As a matter of course, the first transmission line 25 and the second transmission line 29 may be configured by one transmission line. The main control unit 20 is provided with a storing device (not illustrated) which stores commodity information configured by a commodity price, a commodity code and the like for each of the commodities C.

The delivery drive unit 21 is for controlling the operation of the commodity delivery mechanism 2c provided in each of the commodity storage racks 2, in more detail, the operation of an actuator such as a solenoid used for the commodity delivery mechanism 2c, and performs a predetermined commodity delivery by operating the predetermined commodity delivery mechanism 2c on the basis of the control signal from the main control unit 20.

The compressor drive unit 22 is for controlling the operation of the compressor 9 configuring the refrigerator, in more detail, the operation of the motor for driving the compressor 9, and performs desired compressor drive on the basis of the control signal from the main control unit 20.

The heater drive unit 23 is for controlling energization for each of the electric heaters 6, and performs energization for the predetermined electric heater 6 on the basis of the control signal from the main control unit 2.

The temperature regulating adjuster 24 is for selecting any one of the three modes described above for each of the commodity storage rooms SR, includes a mode selecting push-button switch and the like, and sends out the data relating to the selected mode to the main control unit 20.

The modem 26 is for performing data communication with an external server and the like by using a public telephone line 27 or the like. The radio communication unit 28 is for performing data communication by radio with an external server and the like by using a cellular phone network, a PHS telephone network and the like.

Hereinafter, the configuration of the vending machine reader/writer 100 of the present embodiment will be described.

The reader/writer 100 performs settlement processing for electronic money by reading and writing electronic money information stored in a contactless IC card 200 as an information storing medium on the basis of the control signal from the main control unit 20. Further, the reader/writer 100 includes a connector 101, a display unit 102, an electronic money service selecting button 103, an RF circuit unit 104, an antenna 105, a storage unit 106 and a reader/writer control unit 107 (hereinafter, called the RW control unit 107), and the respective devices 101 to 106 are connected to the RW control unit 107.

The connector 101 is used as an interface unit for connecting the RW control unit 107 and the first transmission line 25, and one connector 101 is disposed in the reader/writer 100.

The display unit 102 is a known display device such as a liquid crystal display, and displays the character information and image information received from the RW control unit 107 in a predetermined size.

The electronic money service selecting button 103 is for selecting the kind of electronic money service used at the time of the settlement processing by electronic money, and when it is depressed, the electronic money service selecting button 103 transmits the signal, which indicates the kind of the electronic money service corresponding to the depressed sequence, to the RW control unit 107. In the present embodiment, two electronic money services that are "electronic money service A" and "electronic money service B" are used as examples of a plurality of electronic money services.

The RF circuit unit 104 is for performing data communication between the RW control unit 107 and the contactless IC card 200 in a noncontact manner via the antenna 105 which performs communication with the contactless IC card 200 by irradiating a radio wave to the contactless IC card 200, and is configured by a known AD/DA converter, and a rectifier circuit or the like.

The storage unit 106 is a rewritable storage element such as an EEPROM, and stores an electronic money service A settlement program 106a for performing settlement processing by the electronic money service A, and an electronic money service B settlement program 106b for performing settlement processing by the electronic money service B.

The RW control unit 107 is configured by a computer including a CPU, a RAM, a ROM, and a timer circuit or the like, and is for controlling various devices in the reader/writer 100. The detailed operation of the RW control unit 107 will be described later.

Next, the configuration of the contactless IC card 200 which performs settlement processing for electronic money with the reader/writer 100 will be described with reference to Figure 4.

In the contactless IC card 200, an IC card antenna (not illustrated) in a coil shape for transmitting and receiving signals in a noncontact manner with the reader/writer 100, and an IC chip connected to the antenna are buried. The IC chip is provided with an IC card control unit 201 which controls the circuit in the IC chip, and an IC card storage unit 202 which stores various kinds of information, as shown in Figure 4. The contactless IC card 200 of the present embodiment is configured to be usable for two electronic money services of the electronic money service A and the electronic money service B.

The IC card control unit 201 includes a CPU and memories such as a RAM and a ROM, and performs update or readout processing of various kinds of information stored in the IC card storage unit 202 in response to an IC card command received from the reader/writer 100 via the IC card antenna.

The IC card storage unit 202 is a writable storage element such as an EEPROM, and a storage area of the IC card storage unit 202 is provided with an area 203 for the electronic money service A and an area 204 for the electronic money service B. The respective areas 203 and 204 store service IDs 203a and 204a, user IDs 203b and 204b, and electronic money information 203c and 204c. The service IDs 203a and 204a are for discriminating the kinds of electronic money services, and are given a different ID for each money service. The users IDs 203b and 204b are for discriminating the users of the respective electronic money services, and a different ID is given to each of the contactless IC cards 200. For the electronic money information, the balance of electronic money, credit number and the like can be used in order to be adapted to a prepaid type or a postpaid type electronic money settlement.

About the vending machine and the reader/writer 100 which are configured as above, the operations of the main control unit 20 and the RW control unit 107 when the user purchases the commodity C by using the electronic money of the contactless IC card 200 will be described. Here, briefly explaining the flow of commodity purchasing, the user selects the commodity C and the electronic money service used for settlement processing, and thereafter, the user holds the contactless IC card 200 inside the range communicable with the reader/writer 100, whereby the commodity C is delivered. In this case, any of the commodity and the electronic money service may be selected first.

First, the operation of the main control unit 20 in the case of purchasing the commodity C by using the electronic money will be described with reference to the flowchart of Figure 5. When the user selects the commodity C by using the commodity selecting button 14 (step S1), the main control unit 20 lights the selection lamp of the commodity selecting button 14 corresponding to the selected commodity C, and starts measurement of time by using the timer of the main control unit 20 (Step S2).

Further, the main control unit 20 extracts the commodity information of the selected commodity C from the storage device, and transmits the commodity information to the reader/writer 100 (step S3). Here, the user can select another commodity by using the commodity selection button 14 until the reader/writer 100 is brought into a state communicable with the contactless IC card 200 (described in step S17 which will be described later). In this case, the main control unit 200 performs the processing of steps S1 to S3. Thereby, even if the commodity C is mistakenly selected, a desired commodity C can be newly selected before the settlement processing for the electronic money.

Next, when the main control unit 20 already transmits the commodity information of the commodity C, that is, the commodity C is in the state already selected (step S4), if the main control unit 20 receives a settlement end signal which will be described later and the commodity information at the time of end of settlement from the RW control unit 107 (step S5), the main control unit 20 operates the commodity delivery mechanism 2c of the commodity storage rack 2 storing the commodity corresponding to the commodity information received from the RW control unit 107 and performs commodity delivery (step S6). When the main control unit 20 does not transmit the commodity information in step S4, that is, the commodity C is not selected, the main control unit 20 shifts to the process of step S1.

Further, when the main control unit 20 receives a cancel signal instead of the settlement end signal from the RW control unit 107, or a predetermined time (for example, 30 seconds) elapses after starting the time measurement in step S2 (step S7), the main control unit 20 performs reset processing by turning off the selection lamp of the commodity selecting button 14 corresponding to the selected commodity, C (step S8). If the main control unit 20 does not receive a settlement end signal or a cancel signal from the RW control unit 107, the main control unit 20 shifts to the processing of step S1.

Next, the operation of the RW control unit 107 in the case of purchasing the commodity C by using the electronic money will be described with reference to the flowchart of Figure 6. The RW control unit 107 stops radio wave irradiation from the antenna 105 in the initial state.

First, every time the RW control unit 107 receives the commodity information from the main control unit 20 (step S11), the RW control unit 107 causes the display unit 102 to display the received commodity information, stores the received commodity information in the RAM of the RW control unit 107 (step S12), and irradiates a radio wave from the antenna 105 for a predetermined time (for example, 10 seconds) (step S13). Here, the RW control unit 107 transmits the IC card command for acquiring a predetermined response signal from the contactless IC card 200 to the antenna 105 via the RF circuit unit 104. Further, the IC card command is superimposed on the radio wave irradiated from the antenna 105 in step S13. In the present embodiment, the card ID (not illustrated) peculiar to the contactless IC card 200 is used as a response signal.

Next, when the user selects one electronic money service (for example, the electronic money service A) by using the electronic money service selecting button 103 (step S14), the RW control unit 107 performs setting of the electronic money service by extracting the electronic money service A settlement program 106a corresponding to the selected electronic money service A from the storage unit 106 and storing it in the RAM of the RW control unit 107 (step S15). Further, the RW control unit 107 irradiates the radio wave similar to the one irradiated in step S13 from the antenna 105 for a predetermined time (for example, 10 seconds) (step S16). Here, the user can select the other electronic money service (for example, the electronic money service B) by using the electronic money service selecting button 103 until the RW control unit 107 is brought into the state capable of communicating with the contactless IC card 200 (described in step S18 which will be described later). In this case, the RW control unit 107 performs the process of step S14 to step S16.

Next, when the commodity information and the settlement program for the electronic money service are stored in the RAM (step S17), the RW control unit 107 determines whether or not it is in the state communicable with the contactless IC card 200 (step S18). The concrete process will be described hereinafter. When the user holds the contactless IC card 200 over the reader/writer 100 first while the radio wave is irradiated from the antenna 105 in step S13 or step S16, the IC card control unit 201 of the contactless IC card 200 is actuated by the radio wave irradiated from the antenna 105, and transmits a response signal to the IC card command received from the reader/writer 100. If the commodity information and the settlement program for the electronic money service are not stored in the RAM in step S17, the RW control unit 107 shifts to the process of the step S11.

Meanwhile, the RW control unit 107 detects the contactless IC card 200 by receiving the response signal from the contactless IC card 200 via the antenna 105 and the RF circuit unit 104. At this time, the RW control unit 107 determines that it is in the state communicable with the contactless IC card 200. The RW control unit 107 determines that it is in the incommunicable state when it cannot receive the response signal from the contactless IC card 200.

Next, when the RW control unit 107 is in the state communicable with the contactless IC card 200, the RW control unit 107 performs settlement processing for the electronic money on the basis of the commodity selected by the commodity selecting button 14 and the electronic money service selected by the electronic money service selecting button 103 (step S19).

Describing in concrete, the RW control unit 107 executes the settlement program 106b for the electronic money service (for example, the electronic money service B) which is finally stored out of the settlement programs for the electronic money services stored in the RAM of the RW control unit 107. When the settlement program 106b is executed, the RW control unit 107 transmits the IC card command for updating the electronic money information 204c of the electronic money service B by using the commodity information finally stored out of the commodity information stored in the RAM of the RW control unit 107 to the contactless IC card 200 through the RF circuit unit 104 and the antenna 105.

Meanwhile, when receiving the aforementioned IC card command from the reader/writer 100, the IC card control unit 201 updates the electronic money information 204 of the electronic money service B by using the commodity information included in the IC card command, and thereafter, transmits the predetermined settlement end signal to the reader/writer 100. Subsequently, the RW control unit 107 receives the settlement end signal via the antenna 105 and the RF circuit unit 104, and thereby, the electronic money settlement processing normally ends.

Subsequently, when the electronic money settlement processing normally ends, the RW control unit 107 transmits the settlement end signal and the commodity information used for the settlement processing to the main control unit 20 via the connector 101 and the first transmission line 25 (step S20).

When the RW control unit 107 determines that it is in the state incommunicable with the contactless IC card 200 in step S18, and a predetermined time (for example, 10 seconds) elapses after irradiating the radio wave from the antenna 105 (step S21), the RW control unit 107 performs reset processing by erasing all of the settlement program for the electronic money service and the commodity information stored in the RAM of the RW control unit 107 (step S22). Subsequently, the RW control unit 107 transmits a cancel signal to the main control unit 20 via the connector 101 and the first transmission line 25 (step S23). Further, if the above described predetermined time does not elapse in step S21, the RW control unit 107 shifts to the process of step S11.

In this manner, another commodity can be selected until the settlement processing for the electronic money is performed after the commodity C is selected, and the other electronic money service can be selected until the settlement processing for the electronic money is performed after the electronic money service is selected. Therefore, after the commodity C and the electronic money service are selected once, the commodity C and the electronic money service can be selected once again.

Thus, according to the vending machine reader/writer 100 and the vending machine of the present embodiment, the vending machine reader/writer 100 includes the commodity selecting button 14 capable of selecting one commodity from a plurality of commodities C, and selecting another commodity C until the reader/writer 100 is brought into the state communicable with the contactless IC card 200 after the commodity C is selected, the electronic money service selecting button 103 capable of selecting one electronic money service from a plurality of electronic money services, and selecting the other electronic money service until the reader/writer 100 is brought into the state communicable with the contactless IC card 200 after the electronic money service is selected, and the RW control unit 107 which performs settlement processing for the electronic money by reading and writing the electronic money information 203c and 204c of the contactless IC card 200 on the basis of the commodity C selected by the commodity selecting button 14 and the electronic money service selected by the electronic money service selecting button 103, and therefore, after the commodity C and the electronic money service are respectively selected once, the commodity C and the electronic money service can be selected again. Accordingly, the complicated operation of selecting the commodity C and the electronic money service after all the selected contents are cancelled is not required, and therefore, the conveniences of commodity purchasing by using the electronic money can be improved.

Further, the RW control unit 107 performs settlement processing for the electronic money on the basis of the commodity C finally selected by the commodity selecting button 14 and the electronic money service selected by the electronic money service selecting button 103. Therefore, even if the commodity C is mistakenly selected, a desired commodity C can be selected before settlement processing for the electronic money, and the conveniences can be more improved.

Furthermore, the antenna 105 is included, which performs communication with the contactless IC card 200 by irradiating a radio wave to the contactless IC card 200. The RW control unit 107 stops radio wave irradiation from the antenna 105 until selection of the commodity C by the commodity selecting button 14 or selection of the electronic money service by the electronic money service selecting button 103, and irradiates a radio wave from the antenna 105 for a predetermined time (for example, 10 seconds) when the selection of the commodity C by the commodity selecting button 14 or selection of the electronic money service by the electronic money service selecting button 103 is performed. Therefore, the power consumption can be reduced as compared with the case of irradiating radio waves from the antenna 105 all the time.

Hereinafter, a reader/writer 100 and a vending machine according to a second embodiment of the present invention will be described. The present embodiment differs from the first embodiment in the respect that the RW control unit 107 is configured so as to perform settlement processing for electronic money on the basis of all the commodities C selected by the commodity selecting button 14 until being brought into a state communicable with the contactless IC card 200 after one commodity out of the respective commodities C is selected by the commodity selecting button 14, and the electronic money service selected by the electronic money service selecting button 103. The other configuration and operation are similar to those in the first embodiment, and therefore, only the difference will be described here.

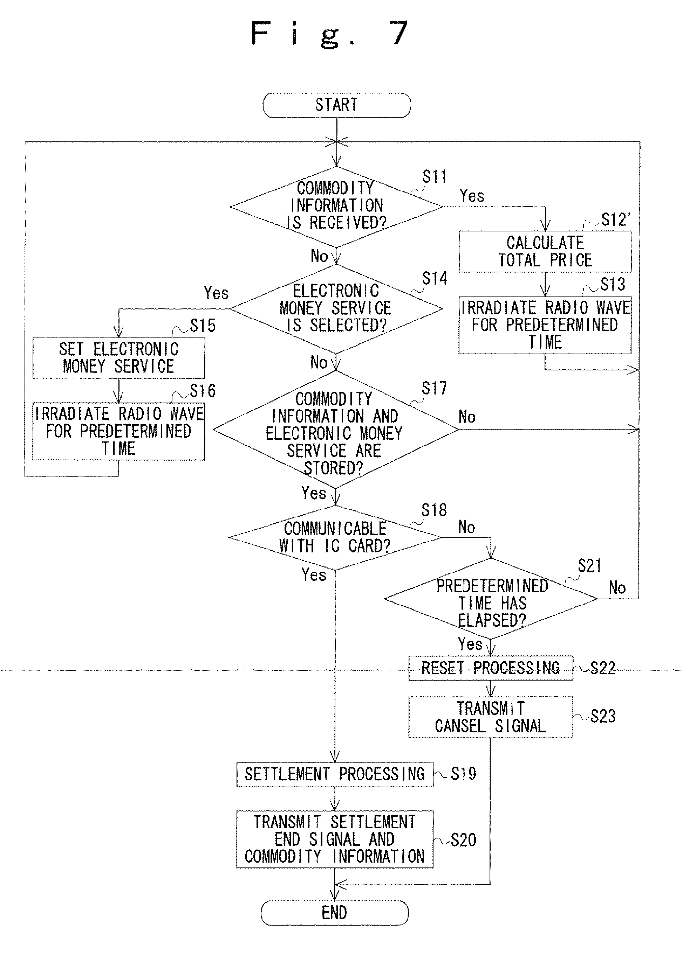

The operation of the RW control unit 107 of the present embodiment will be described with reference to the flowchart of Figure 7. The flowchart of Figure 7 differs from the flowchart of Figure 6 in the respect that every time the RW control unit 107 receives commodity information from the main control unit 20, it stores the commodity information in the RAM of the RW control unit 107, and calculates the total commodity prices included in all the received commodity information and stores the total commodity prices in the RAM (step S12'). When performing settlement processing for the electronic money in the present embodiment (step S19), the RW control unit 107 transmits an IC card command for updating the electronic money information of the electronic money service finally selected by the electronic money service selecting button 103 by using the total amount of money stored in the RAM of the RW control unit 107 to the contactless IC card 200 via the RF circuit unit 104 and the antenna 105.

Further, when the settlement processing for the electronic money normally ends, the RW control unit 107 transmits the settlement end signal and all the commodity information used for the settlement processing to the main control unit 20 via the connector 101 and the first transmission line 25. In this manner, a plurality of commodities C can be purchased at the same time by one settlement processing.

Thus, according to the vending machine reader/writer 100 and the vending machine of the present embodiment, the settlement processing for the electronic money is performed on the basis of all the commodities C selected by the commodity selecting button 14 until the settlement processing for the electronic money is performed after one commodity C of the respective commodities C is selected by the commodity selecting button 14, and the electronic money service selected by the electronic money service selecting button 103. Therefore, a plurality of commodities C can be purchased at the same time by one settlement processing, and the conveniences can be more improved.

Hereinafter, a reader/writer 100 and a vending machine according to a third embodiment of the present invention will be described. The present embodiment differs from the first to second embodiments in the respect that the RW control unit 107 is configured so that when capable of communicating with the first contactless IC card 200 storing the electronic money information 203c and 204c of a plurality of electronic money services, the RW control unit 107 performs settlement processing for electric money on the basis of the commodity C selected by the commodity selecting button 14 and the electronic money service selected by the electronic money service selecting button 103, and when capable of communicating with a second contactless IC card 300 storing electronic money information 303c of one electronic money service, the RW control unit 107 performs settlement processing for the electric money on the basis of the commodity C selected by the commodity selecting button 14 and the electronic money service corresponding to the electronic money information 303c stored in the second contactless IC card 300. The other configuration and operation are similar to those in the first embodiment, and therefore, only the difference will be described here.

The first contactless IC card 200 in the present embodiment is configured similarly to the contactless IC card 200 in the aforementioned first embodiment.

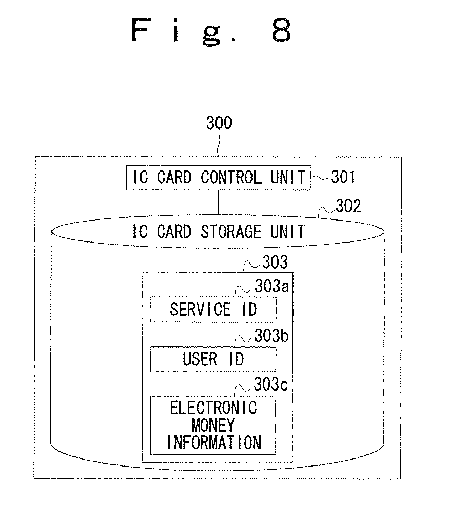

In the second contactless IC card 300, an IC card antenna (not illustrated) in a coil shape for transmitting and receiving signals with the reader/writer 100 in a noncontact manner, and an IC chip connected to the antenna are buried. The IC chip is provided with an IC card control unit 301 which controls a circuit in the IC chip, and an IC card storage unit 302 which stores various kinds of information, as shown in Figure 8.

The IC card control unit 301 includes a CPU and memories such as a RAM and a ROM, and performs update or readout processing of various kinds of information stored in the IC card storage unit 302 in response to the IC card command received from the reader/writer 100 via the IC card antenna.

The IC card storage unit 302 is a rewritable storage element such as an EEPROM, and the storage area of the IC card storage unit 302 is provided with an electronic money service A area 303.

The area 303 stores a service ID 303a, a user ID 303b and electronic money information 303c. Each of information 303a, 303b and 303c is configured similarly to each of the information 203a, 203b and 203c stored in the first contactless IC card 200.

About the vending machine and the reader/writer 100 configured as above, the operation of the RW control unit 107 when a user purchases the commodity C by using the electronic money of the contactless IC card 200 will be described. Explaining the flow of commodity purchasing briefly here, the user selects the commodity C and the electronic money service used for settlement processing, and thereafter, the user holds the first contactless IC card 200 or the second contactless IC card 300 inside the range communicable with the reader/writer 100, whereby the commodity C is delivered. In this case, any of the commodity and the electronic money service may be selected first. Further, when the user purchases the commodity C by using the second contactless IC card 300 which stores only one electronic money service, the user can purchase the commodity C by the procedural step of only holding the second contactless IC card 300 inside the range communicable with the reader/writer 100 after selecting the commodity C.

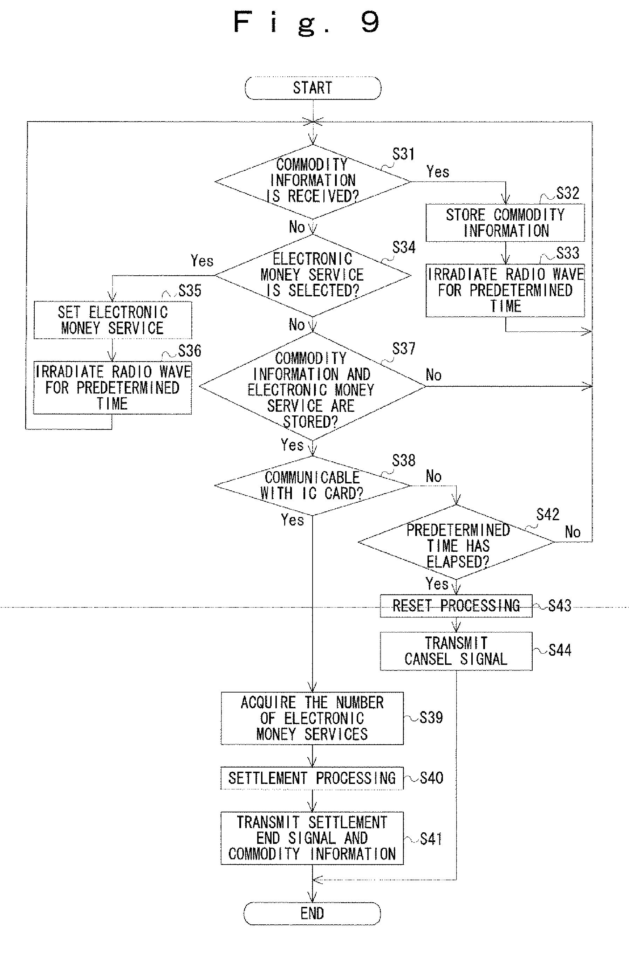

Hereinafter, the operation of the RW control unit 107 in the case of purchasing the commodity C by using the electronic money will be described with reference to a flowchart of Figure 9. The RW control unit 107 stops radio wave irradiation from the antenna 105 in the initial state.

First, every time the RW control unit 107 receives the commodity information from the main control unit 20 (step S31), the RW control unit 107 causes the display unit 102 to display the received commodity information and stores the commodity information in the RAM of the RW control unit 107 (step S32), and irradiates a radio wave from the antenna 105 for a predetermined time (for example, 10 seconds) (step S33). Here, the RW control unit 107 transmits the IC card command for acquiring the predetermined response signal from the contactless IC card 200 to the antenna 105 via the RF circuit unit 104. Further, the IC card command is superimposed on the radio wave irradiated from the antenna 105 in step S33. In the present embodiment, the card ID (not illustrated) peculiar to the contactless IC card 200 is used as a response signal.

Next, when the user selects one electronic money service (for example, the electronic money service A) by using the electronic money service selecting buttons 103 (step S34), the RW control unit 107 performs setting of the electronic money service by extracting the electronic money service A settlement program 106a corresponding to the selected electronic money service A from the storage unit 106, and stores it in the RAM of the RW control unit 107 (step S35). Further, the RW control unit 107 irradiates a radio wave similar to that irradiated in step S13 from the antenna 105 for a predetermined time (for example, 10 seconds) (step S36). Here, the user can select the other electronic money service (for example, the electronic money service B) by using the electronic money service selecting button 103 until the RW control unit 107 is brought into a state communicable with the contactless IC card 200 (descried in step S38 which will be described later). In this case, the RW control unit 107 performs processes of step S34 to step S36.

Next, when the commodity information and the settlement program for the electronic money service are stored in the RAM (step S37), the RW control unit 107 determines whether or not it is in the state communicable with the first or second contactless IC card 200 or 300 (step S38). The concrete process will be described hereinafter. First, when the user holds the first or second contactless IC cars 200 and 300 over the reader/writer 100 while a radio wave is irradiated from the antenna 105 in step S33 or step S36, the IC card control unit 201 or 301 of the first or second contactless IC card 200 or 300 is actuated by the radio wave irradiated from the antenna 105, and transmits a response signal to the IC card command received from the reader/writer 100. If the commodity information and the settlement program for the electronic money service are not stored in the RAM in step S37, the RW control unit 107 shifts to the process of step S31.

Meanwhile, the RW control unit 107 detects the first or second contactless IC card 200 or 300 by receiving the response signal from the first or second contactless IC card 200 or 300 via the antenna 105 and the RF circuit unit 104. At this time, the RW control unit 107 determines that it is in the state communicable with the first or second contactless IC card 200 or 300. If the RW control unit 107 cannot receive the response signal from the first or second contactless IC card 200 or 300, the RW control unit 107 determines that it is in an incommunicable state.

Next, when the RW control unit 107 is brought into the state communicable with the first or second contactless IC card 200 or 300, it acquires the number of electronic money services usable with the contactless IC card which becomes communicable (step S39).

The process content of step S19 when, for example, the first contactless IC card 200 becomes communicable will be described in concrete. The RW control unit 107 transmits the IC card command for reading the service IDs of all the electronic money services stored in the first contactless IC card 200 to the first contactless IC card 200 via the RF circuit unit 104 and the antenna 105. Meanwhile, when the IC card control unit 201 receives the aforementioned IC card command from the reader/writer 100, it transmits the service IDs 203a and 204a stored in the IC card storage unit 202 to the reader/writer 100. The RW control unit 107 receives the service IDs 203a and 204a via the antenna 105 and the RF circuit unit 104, and thereby, can determine that the number of electronic money services is two.

When the second contactless IC card 300 becomes communicable, the RW control unit 107 can determine that the number of electronic money services is one by reading one service ID 303a.

Subsequently, the RW control unit 107 performs settlement processing for the electronic money on the basis of the commodity selected by the commodity selecting button 14 and the electronic money service (step S40). Here, the RW control unit 107 switches the process content in accordance with the number of electronic money services acquired in step S19.

Explaining in concrete, when the RW control unit 107 is communicable with the second contactless IC card 300, that is, if the number of electronic money services is one (only the electronic money service A), the RW control unit 107 reads out the settlement program 106a for the electronic money service (electronic money service A) corresponding to the service ID 303a which is read out in step S39 from the storage unit 106 to store the settlement program in the RAM, and executes the settlement program 106a. When the settlement program 106a is executed, the RW control unit 107 transmits the IC card commend for updating the electronic money information 303c of the electronic money service A by using the commodity information finally stored out of the commodity information stored in the RAM of the RW control unit 107 to the second contactless IC card 300 via the RF circuit unit 104 and the antenna 105.

Meanwhile, when the IC card control unit 301 of the second contactless IC card 300 receives the aforementioned IC card command from the reader/writer 100, the IC card control unit 301 updates the electronic money information 303c of the electronic money service A by using the commodity information included in the IC card command, and thereafter, transmits a predetermined settlement end signal to the reader/writer 100. Subsequently, the RW control unit 107 receives the settlement end signal via the antenna 105 and the RF circuit unit 104, and thereby, the settlement processing for the electronic money normally ends.

In this manner, when the RW control unit 107 is communicable with the second contactless IC card 300, the settlement processing for the electronic money is performed on the basis of the commodity C selected by the commodity selecting button 14 and the electronic money service A corresponding to the electronic money information 303c stored in the second contactless IC card 300. Therefore, when the user purchases a commodity by using the information storing medium storing the electronic money information corresponding to one electronic money service, the procedural step of selecting the electronic money service by using the electronic money service selecting button 103 can be omitted.

Further, when the RW control unit 107 is communicable with the first contactless IC card 200, that is, when two electronic money services (the electronic money service A and the electronic money service B) are detected, the RW control unit 107 executes the settlement program 106b for the electronic money service (for example, the electronic money service B) which is finally stored out of the settlement programs for the electronic money services stored in the RAM of the RW control unit 107. When the settlement program 106b is executed, the RW control unit 107 transmits the IC card command for updating the electronic money information 204c of the electronic money service B by using the commodity information which is finally stored out of the commodity information stored in the RAM of the RW control unit 107 to the first contactless IC card 200 via the RF circuit unit 104 and the antenna 105.

Meanwhile, when the IC card control unit 201 of the first contactless IC card 200 receives the aforementioned IC card command from the reader/writer 100, the IC card control unit 201 updates the electronic money information 204c of the electronic money service B by using the commodity information included in the IC card command, and thereafter, transmits a predetermined settlement end signal to the reader/writer 100. Subsequently, the RW control unit 107 receives the settlement end signal via the antenna 105 and the RF circuit unit 104, and thereby, settlement processing for the electronic money normally ends.

Subsequently, when the settlement processing for the electronic money normally ends, the RW control unit 107 transmits the settlement end signal and the commodity information used in the settlement processing to the main control unit 20 via the connector 101 and the first transmission line 25 (step S41).

When the RW control unit 107 determines that it is in the state incommunicable with the first or second contactless IC card 200 or 300 in step S38, and a predetermined time (for example, 10 seconds) elapses after irradiating a radio wave from the antenna 105 (step S42), the RW control unit 107 performs reset processing by erasing all the settlement programs for the electronic money services and the commodity information stored in the RAM of the RW control unit (step S43). Subsequently, the RW control unit 107 transmits a cancel signal to the main control unit 20 via the connector 101 and the first transmission line 25 (step S44). Further, when the above described predetermined time does not elapse in step S42, the RW control unit 107 shifts to the process of step S11.

In this manner, according to the vending machine reader/writer 100 and the vending machine of the present embodiment, the vending machine reader/writer 100 includes the electronic money service selecting button 103 for selecting one electronic money service out of a plurality of electronic money services, and the RW control unit 107 which performs settlement processing for the electronic money on the basis of the commodity C selected by the commodity selecting button 14 and the electronic money service selected by the electronic money service selecting button 103 when capable of communicating with the first contactless IC card 200 storing the electronic money information of a plurality of electronic money services, and performs settlement processing for the electronic money on the basis of the commodity C selected by the commodity selecting button 14 and the electronic money service corresponding to the electronic money information 303c stored in the second contactless IC card 300 when capable of communicating with the second contactless IC card 300 storing the electronic money information of one electronic money service, and therefore, when the user purchases the commodity C by using the second contactless IC card 300, the user can omit the procedural step of selecting the electronic money service. Accordingly, the procedure of commodity purchasing in the case of using the contactless IC card corresponding to only one electronic money service does not have to be changed according to vending machines, and therefore, conveniences of commodity purchasing using the electronic money can be improved.

Further, if the RW control unit 107 is brought into a state communicable with the second contactless IC card 300 storing the electronic money information 303c of one electronic money service after the commodity C is selected by the commodity selecting button 14, the RW control unit 107 performs settlement processing for the electronic money on the basis of the commodity C selected by the commodity selecting button 14 and the electronic money service A corresponding to the electronic money information 303c stored in the second contactless IC card 300. Therefore, even if the commodity C is mistakenly selected, the desired commodity C can be selected before the settlement processing for the electronic money, and the conveniences can be more improved.

Furthermore, the antenna 105 is included, which performs communication with each of the contactless IC cards 200 and 300 by irradiating a radio wave to each of the contactless IC cards 200 and 300, and the RW control unit 107 stops radio wave irradiation from the antenna 105 until selection of the commodity C by the commodity selecting button 14 or selection of the electronic money service by the electronic money service selecting button 103 is performed, and irradiates a radio wave from the antenna 105 for a predetermined time (for example, 10 seconds) when selection of the commodity C by the commodity selecting button 14 or selection of the electronic money service by the electronic money service selecting button 103 is performed. Therefore, as compared with the case of irradiating a radio wave from the antenna 105 all the time, the power consumption can be reduced.

Hereinafter, a reader/writer 100 and a vending machine according to a fourth embodiment of the present invention will be described. The present embodiment differs from the third embodiment in the respect that the RW control unit 107 is configured so that when the commodity C is selected by the commodity selecting button 14 after the RW control unit 107 is in the state communicable with the second contactless IC card 300 storing the electronic money information 303c for one electronic money service, the RW control unit 107 performs settlement processing for the electronic money on the basis of the commodity C selected by the commodity selecting button 14 and the electronic money service A corresponding to the electronic money information 303c stored in the second contactless IC card 300. The other configuration and operation are the same as those of the third embodiment, and therefore, only the difference will be described.

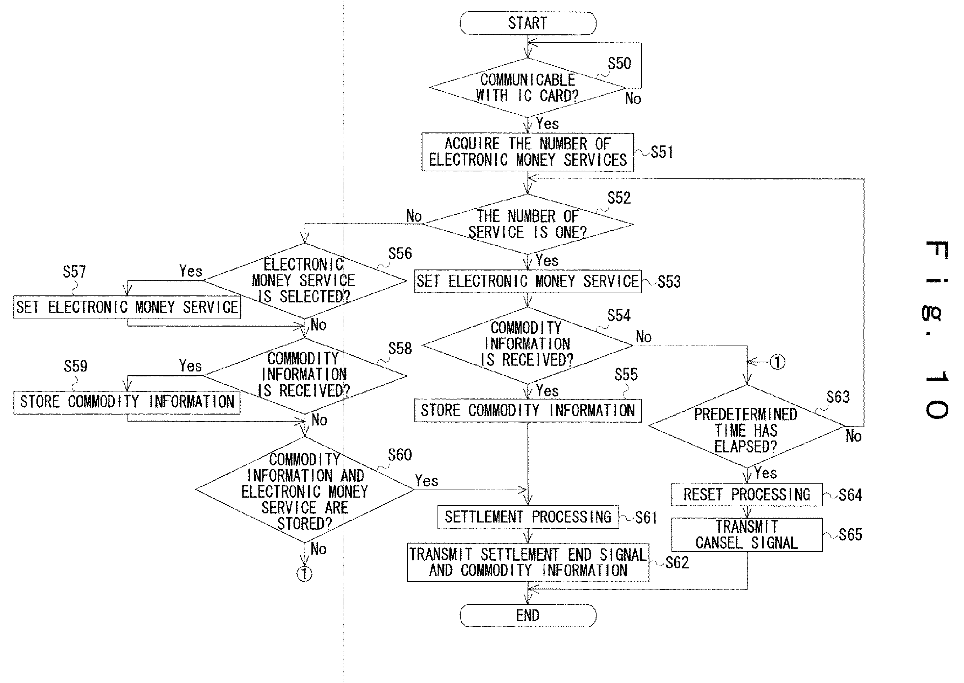

The operation of the RW control unit 107 of the present embodiment will be described with reference to the flowchart of Figure 10. The RW control unit 107 irradiates a radio wave from the antenna 105 in the initial state.

First, the RW control unit 107 determines whether or not it is in the state communicable with the first or second contactless IC card 200 or 300 (step S50), and when determining that it is in the communicable state, the RW control unit 107 acquires the number of usable electronic money services with the contactless IC card 200 or 300 (step S51). The process contents of step S50 and step S51 are similar to the process contents of the aforementioned steps S38 and S39.

Next, when one usable electronic money service (only the electronic money service A) is detected, that is, when the RW control unit 107 is communicable with the second contactless IC card 300 (step S52), the RW control unit 107 performs setting of the electronic money service by extracting the electronic money service A settlement program 106a corresponding to the electronic money service A from the storage unit 106, and storing it in the RAM of the RW control unit 107 (step S53). When the RW control unit 107 receives commodity information from the main control unit 20 (step S54), the RW control unit 107 stores the received commodity information in the RAM of the RW control unit 107 (step S55), and performs settlement processing for the electronic money (step S61).

Further, when two usable electronic money services (the electronic money service A and the electronic money service B) are detected, that is, when the RW control unit 107 is communicable with the first contactless IC card 200, the RW control unit 107 determines whether or not one electronic service is selected by using the electronic money service selecting button 103 (step S56). Here, if one electronic money service (for example, the electronic money service B) is selected, the RW control unit 107 performs setting of the electronic money service by extracting the electronic money service B settlement program 106b corresponding to the selected electronic money service B from the storage unit 106, and storing the electronic money service B settlement program 106b in the RAM of the RW control unit 107 (step S57).

Next, the RW control unit 107 determines whether or not it receives commodity information from the main control unit 20 (step S58), and when it receives commodity information, the RW control unit 107 stores the commodity information in the RAM of the RW control unit 107 (step S59). When the commodity information and the electronic money service settlement program are stored in the RAM (step S60), the RW control unit 107 performs settlement processing for the electronic money (step S61).

The content of the settlement processing for the electronic money of step S61 is similar to the processing content of the aforementioned step S40. When the settlement processing for the electronic money ends normally, the RW control unit 107 transmits a settlement end signal and the commodity information used for the settlement processing to the main control unit 20 via the connector 101 and the first transmission line 25 (step S62).

If the RW control unit 107 does not receive the commodity information from the main control unit 20 in step S54, and a predetermined time (for example, 20 seconds) elapses after the RW control unit 107 is brought into a state communicable with the second contactless IC card 300 (step S63), the RW control unit 107 performs reset processing by erasing all the settlement programs for the electronic money services stored in the RAM of the RW control unit 107 (step S64). The RW control unit 107 transmits a cancel signal to the main control unit 20 via the connector 101 and the first transmission line 25 (step S65). When any one of the commodity information and the settlement program for the electronic money service is not stored in the RAM of the RW control unit 107 in step S60, the RW control unit 107 shifts to the processing of step S63.

In this case, when the user purchases the commodity C by using the second contactless IC card 300 storing the electronic money information 303c corresponding to one electronic money service, the user can purchase the commodity by the simple procedure of selecting the commodity C after holding the second contactless IC card 300 over the reader/writer 100.

Thus, according to the vending machine reader/writer 100 and the vending machine of the present embodiment, when the commodity C is selected by the commodity selecting button 14 after the second contactless IC card 300 storing the electronic money information 303c of one electronic money service and the reader/writer 100 are brought into a communicable state with each other, the reader/writer 100 performs settlement processing for the electronic money on the basis of the commodity C selected by the commodity selecting button 14, and the electronic money service corresponding to the electronic money information 303c stored in the second contactless IC card 300. Therefore, the commodity can be purchased by the simple procedure of selecting the commodity C after holding the second contactless IC card 300 over the reader/writer 100, and the conveniences can be more improved.

The above described embodiments are only concrete examples of the present invention, and the present invention is not limited to only the above described embodiments. For example, in the aforementioned embodiments, the examples of using the contactless IC card 200 as an information storing medium are shown, but other than this, a cellular phone and the like loaded with an RFID (Radio Frequency Identification) tag and an IC chip may be used as the information storing medium.

Further, the main control unit 20 may be configured to be operated similarly to the operation of the RM control unit 107 shown in Figure 6 or Figure 7. Further, the electronic money service selecting button 103 may be disposed at the front surface of the outer door 12 of the vending machine.

Furthermore, the RW control unit 107 may be configured so that when acquiring the number of electronic money services usable with each of the contactless IC cards 200 and 300, the RW control unit 107 transmits the IC card command for reading out the electronic money information with respect to each of the electronic money services corresponding to the settlement programs 106a and 106b stored in the storage unit 106 to the contactless IC cards 200 and 300, and acquires the number of electronic money services on the basis of the number of pieces of the electronic money information received from each of the contactless IC cards 200 and 300.

## Claims

1. A vending machine reader/writer (100) which is disposed in a vending machine provided with a commodity selecting means (14), and performs settlement processing for electronic money by reading/writing electronic money information (203c, 303c) stored in a predetermined information storing medium (200, 300) on the basis of a commodity selected by the commodity selecting means (14), comprising:
an electronic money service selecting means (103) for selecting one electronic money service out of a plurality of electronic money services; and
a control means (107) which performs settlement processing for the electronic money on the basis of a commodity (C) selected by the commodity selecting means (14) and also on the basis of either the electronic money service selected by the electronic money service selecting means (103) or an electronic money service corresponding to the electronic money information (303c) stored in the information storing medium (300), if capable of communicating with said information storing medium (200, 300).

2. The vending machine reader/writer (100) according to claim 1,
wherein said electronic money service selecting means (103) is configured to be able to select one electronic money service out of a plurality of electronic money services and select another electronic money service until the reader/writer is brought into a state communicable with said information storing medium (200) after the electronic money service is selected, and
said control means (107) performs settlement processing for the electronic money on the basis of the commodity (C) which is selected by the commodity selecting means (14) by the time when the reader/writer is brought into a state communicable with said information storing medium (200) after one commodity out of the respective commodities (C) is selected by said commodity selecting means (14), and also on the basis of the electronic money service selected by the electronic money service selecting means (103).

3. The vending machine reader/writer (100) according to claim 2,
wherein said control means (107) performs settlement processing for the electronic money on the basis of the commodity (C) which is finally selected by the commodity selecting means (14) by the time when the reader/writer is brought into a state communicable with said information storing medium (200) after one commodity out of the respective commodities (C) is selected by said commodity selecting means (14), and also on the basis of the electronic money service selected by the electronic money service selecting means (103).

4. The vending machine reader/writer (100) according to claim 2,
wherein said control means (107) performs settlement processing for the electronic money on the basis of all the commodities (C) which are selected by the commodity selecting means (14) by the time when the reader/writer is brought into a state communicable with said information storing medium (200) after one commodity out of the respective commodities (C) is selected by said commodity selecting means (14), and also on the basis of the electronic money service selected by the electronic money service selecting means (103).

5. The vending machine reader/writer (100) according to claim 1,
wherein said control means (107) performs settlement processing for the electronic money on the basis of the commodity (C) which is selected by said commodity selecting means (14) and also on the basis of the electronic money service which is selected by the electronic money service selecting means (103) capable of communicating with said information storing medium (200) storing the electronic money information (203c, 204c) of a plurality of electronic money services, and performs settlement processing for the electronic money on the basis of the commodity (C) which is selected by the commodity selecting means (14) and also on the basis of the electronic money service corresponding to the electronic money information (303c) stored in the information storing medium (300), if capable of communicating with the information storing medium (300) storing the electronic money information (303c) of one electronic money service.

6. The vending machine reader/writer (100) according to claim 5,
wherein said control means (107) performs settlement processing for the electronic money on the basis of the commodity (C) selected by the commodity selecting means (14) and also on the basis of the electronic money service corresponding to the electronic money information (303c) stored in the information storing medium (300) if the reader/writer is brought into a state communicable with the information storing medium (300) storing the electronic money information (303c) of one electronic money service after the commodity (C) is selected by said commodity selecting means (14).

7. The vending machine reader/writer (100) according to claim 1, 2, 3, 4, 5 or 6, further comprising:
an antenna (105) which performs communication with the information storing medium (200, 300) by radiating a radio wave to said information storing medium (200, 300),
wherein the control means (107) stops radio wave radiation from the antenna (105) until selection of the commodity (C) by the commodity selecting means (14) or selection of the electronic money service by the electronic money service selecting means (103) is performed, and allows a radio wave to be radiated from the antenna (105) for a predetermined time when selection of the commodity (C) by the commodity selecting means (14) or selection of the electronic money service by the electronic money service selecting means (103) is performed.

8. The vending machine reader/writer (100) according to claim 5,
wherein said control means (107) performs settlement processing for the electronic money on the basis of the commodity (C) which is selected by the commodity selecting means (14) and also on the basis of the electronic money service corresponding to the electronic money information (303c) stored in the information storing medium (300) if the commodity (C) is selected by said commodity selecting means (14) after the reader/writer is brought into a state communicable with the information storing medium (300) storing the electronic money information (303c) of one electronic money service.

9. A vending machine, comprising:
a commodity selecting means (14);
a reader/writer (100) which performs communication with an information storing medium (200, 300) which stores electronic money information (203c, 303c);
an electronic money service selecting means (103) for selecting one electronic money service out of a plurality of electronic money services; and
a control means (107) which performs settlement processing for the electronic money by reading/writing the electronic money information (203c, 303c) of the information storing medium (200, 300) through the reader/writer (100) on the basis of a commodity (C) selected by the commodity selecting means (14), and also on the basis of either an electronic money service selected by the electronic money service selecting means (103) or an electronic money service corresponding to the electronic money information (303c) stored in the information storing medium (300), if capable of communicating with said information storing medium (200).

10. The vending machine according to claim 9,
wherein said commodity selecting means (14) is configured to be able to select one commodity out of a plurality of commodities (C) and select another commodity (C) until the reader/writer (100) is brought into a state communicable with the information storing medium (200) after the commodity (C) is selected, and
said electronic money service selecting means (103) is configured to be able to select one electronic money service out of a plurality of electronic money services and select another electronic money service until the reader/writer (100) is brought into a state communicable with the information storing medium (200) after the electronic money service is selected.

11. The vending machine according to claim 10,
wherein said control means (107) performs settlement processing for the electronic money on the basis of the commodity (C) which is finally selected by the commodity selecting means (14), and also on the basis of the electronic money service selected by the electronic money service selecting means (103).

12. The vending machine according to claim 10,
wherein said control means (107) performs settlement processing for the electronic money on the basis of all the commodities (C) which are selected by the commodity selecting means (14), and also on the basis of the electronic money service which is selected by the electronic money service selecting means (103).

13. The vending machine according to claim 9,
wherein said control means (107) performs settlement processing for said electronic money on the basis of the commodity (C) which is selected by the commodity selecting means (14) and also on the basis of the electronic money service which is selected by the electronic money service selecting means (103), if the information storing medium (200) storing the electronic money information (203c, 204c) of a plurality of electronic money services and the reader/writer (100) are communicable with each other, and performs settlement processing for said electronic money on the basis of the commodity (C) which is selected by the commodity selecting means (14) and also on the basis of the electronic money service corresponding to the electronic money information (303c) stored in the information storing medium (300), if the information storing medium (300) storing the electronic money information (303c) of one electronic money service and the reader/writer (100) are communicable with each other.

14. The vending machine according to claim 13,
wherein said control means (107) performs settlement processing of said electronic money on the basis of the commodity (C) which is selected by the commodity selecting means (14) and also on the basis of the electronic money service corresponding to the electronic money information (303c) which is stored in the information storing medium (300), if the information storing medium (300) storing the electronic money information (303c) of one electronic money service and said reader/writer (100) are brought into a state communicable with each other after the commodity (C) is selected by said commodity selecting means (14).

15. The vending machine according to claim 9, 10, 11, 12, 13 or 14,
wherein the reader/writer (100) is provided with an antenna (105) which performs communication with the information storing medium (200, 300) by radiating a radio wave to said information storing medium (200, 300), and
the control means (107) stops radio wave radiation from the antenna (105) until selection of the commodity (C) by the commodity selecting means (14) or selection of the electronic money service by the electronic money service selecting means (103) is performed, and allows a radio wave to be radiated from the antenna (105) for a predetermined time when selection of the commodity (C) by the commodity selecting means (14) or selection of the electronic money service by the electronic money service selecting means (103) is performed.

16. The vending machine according to claim 13,
wherein said control means (107) performs settlement processing for said electronic money on the basis of the commodity (C) which is selected by the commodity selecting means (14) and also on the basis of the electronic money service corresponding to the electronic money information (303c) stored in the information storing medium (300), if the commodity (C) is selected by said commodity selecting means (14) after the information storing medium (300) storing the electronic money information (303c) of one electronic money service and said reader/writer (100) are brought into a state communicable with each other.
